# EUROPÄISCHE PATENTSCHRIFT

(11) **EP 3 479 460 B1**
(45) Veröffentlichungstag und Bekanntmachung des Hinweises auf die Patenterteilung: **25.08.2021**
(21) Anmeldenummer: 17735449.5
(22) Anmeldetag: 27.06.2017
(51) Int. Cl.: H02K 5/22, H02K 7/116, H02K 7/14, H02K 3/50, H02K 5/10, H02K 5/16

(54) **ANTRIEBSEINHEIT FÜR EINEN TROMMELMOTOR, TROMMELMOTOR, HINTERFLANSCH UND HERSTELLUNGSVERFAHREN**
DRIVE UNIT FOR A DRUM MOTOR, DRUM MOTOR, REAR FLANGE AND PRODUCTION METHOD
UNITÉ D'ENTRAÎNEMENT POUR UN TAMBOUR MOTEUR, TAMBOUR MOTEUR, FLASQUE ARRIÈRE ET PROCÉDÉS DE PRODUCTION

(30) Priorität: 30.06.2016 DE 102016112036
(43) Veröffentlichungstag der Anmeldung: 08.05.2019
(73) Patentinhaber: Interroll Holding AG, 6592 Sant' Antonino (CH)
(72) Erfinder: MANS, Erwin, 52525 Waldfeucht-Haaren (DE); VAN HOLTHE TOT ECHTEN, Jurriaen, 6417 BH Heerlen (NL)
(74) Vertreter: Kohlhof, Stephan
(86) Internationale Anmeldenummer: PCT/EP2017/065885
(87) Internationale Veröffentlichungsnummer: WO 2018/002070

(56) Entgegenhaltungen:
- WO-A1-2009/139068
- WO-A1-2015/157613
- CN-U- 202 704 402
- CN-U- 203 753 848
- CN-U- 203 753 848
- DE-A1- 10 044 938

## Beschreibung

Die Erfindung betrifft eine elektrische Antriebseinheit für einen Trommelmotor, insbesondere für einen Trommelmotor für Förderanlagen zum Fördern von Behältern, Paletten und dergleichen, beispielsweise in der Lebensmittelindustrie. Die Erfindung betrifft ferner einen Trommelmotor, einen Hinterflansch für eine elektrischen Antriebseinheit eines Trommelmotors sowie ein Verfahren zur Herstellung einer elektrischen Antriebseinheit für einen Trommelmotor und ein Verfahren zur Herstellung eines Trommelmotors.

Trommelmotoren der eingangs genannten Art und ihre Antriebseinheiten werden in Förderanlagen eingesetzt, die oft neben Trommelmotoren auch Förderrollen ohne elektrische Antriebseinheit aufweisen. Je nach Anwendung wird auf die Trommelmotoren und/oder Förderrollen ein Transportband, z.B. ein Transportgurt, ein Kunststoffgliederband oder ein Modular- bzw. Modulband aufgezogen. Alternativ kann das Transportgut auch unmittelbar auf den Trommelmotoren und/oder Förderrollen aufliegen. Um das Transportgut zu transportieren, werden eine oder mehrere Förderrollen durch einen Antrieb in Rotation versetzt. Hierzu weisen die Förderrollen eine Antriebseinheit auf, wobei eine solche Förderrolle mit Antriebseinheit auch als Trommelmotor bezeichnet werden kann. Förderrollen können beispielsweise auch durch einen Antriebsriemen, der mit einer Antriebseinheit oder einem Trommelmotor verbunden ist, in Rotation versetzt werden.

Förderrollen und Trommelmotoren mit Antriebseinheiten sind beispielsweise bekannt aus der DE 10 2006 054 575 A1, EP 1 02 1664 B1, DE 20 2009 012 822 U1, DE 10 2015 104 130 oder DE 10 2015 114 030 der Anmelderin bekannt. Dichtungen zwischen Kabeln und einem Gehäuse sind beispielsweise bekannt aus der CN 203 753 848 U oder der WO 2015/157613 A1.

Typische Anwendungsbereiche von mit Trommelmotoren angetriebenen Förderanlagen sind beispielsweise Postverteilzentren, die lebensmittelverarbeitende Industrie, Montagelinien in der Elektronikindustrie, Maschinenverkettungen in der Automation, Fertigungsanlagen, Versand- und Verpackungslinien, Kommissioniersysteme pharmazeutischer Großverteiler, Palettentransport im Getränkevertrieb, Cargo Handling oder Kassentische in Supermärkten. Insbesondere in der lebensmittelverarbeitenden Industrie, wo beispielsweise Milchprodukte, Fisch oder Fleisch transportiert werden, müssen Trommelmotoren die hohen Anforderungen an die Hygiene in dieser Branche erfüllen sowie Waschvorgängen mit Chemikalien und heißem Wasser unter Hochdruck standhalten. Antriebssysteme mit Getriebemotoren, wie Trommelmotoren, stellen eine potenzielle Quelle von Verschmutzungen in der Lebensmittelverarbeitung dar. Trommelmotoren für den Einsatz in der Lebensmittelverarbeitung müssen daher so konstruiert und verarbeitet sein, dass das Risiko von Verschmutzungen reduziert wird, was insbesondere bei kompakten Trommelmotoren mit kurzer Baulänge in Richtung der Längsachse eine Herausforderung darstellt. Gleichzeitig sollen Trommelmotoren wirtschaftlich und effizient sein.

Es ist daher eine Aufgabe der vorliegenden Erfindung, eine Antriebseinheit für einen Trommelmotor, einen Trommelmotor, einen Hinterflansch sowie ein Verfahren zur Herstellung einer elektrischen Antriebseinheit und ein Verfahren zur Herstellung eines Trommelmotors anzugeben, welche existierende Lösungen verbessern. Insbesondere ist es eine Aufgabe der vorliegenden Erfindung, eine Antriebseinheit für einen Trommelmotor, einen Trommelmotor, einen Hinterflansch sowie ein Verfahren zur Herstellung einer elektrischen Antriebseinheit und ein Verfahren zur Herstellung eines Trommelmotors bereitzustellen, welche eine kostengünstige und/oder zuverlässige, insbesondere im Hinblick auf Lebensmittelsicherheit zuverlässige, Lösung ermöglichen. Ferner ist es eine Aufgabe der vorliegenden Erfindung, eine Antriebseinheit für einen Trommelmotor, einen Trommelmotor, einen Hinterflansch sowie ein Verfahren zur Herstellung einer elektrischen Antriebseinheit und ein Verfahren zur Herstellung eines Trommelmotors bereitzustellen, welche eine besonders kompakte Bauform ermöglichen.

Diese Aufgabe wird gemäß einem Aspekt der Erfindung gelöst durch eine elektrische Antriebseinheit für einen Trommelmotor, umfassend eine elektrische Antriebsvorrichtung mit einem Stator und einem Rotor, die in einem Statorgehäuse angeordnet sind, welches sich entlang einer Längsachse erstreckt, ein Kabel, wobei ein erster Abschnitt des Kabels mit der Antriebsvorrichtung verbunden ist und an einem zweiten Abschnitt des Kabels, der Einzelleitungen aufweist, die Litzen sind, eine Flüssigverkapselung angeordnet ist, , wobei an einem Ende des Statorgehäuses ein Hinterflansch angeordnet ist, der an einer einem Inneren des Statorgehäuses abgewandten Stirnseite einen Ringraum aufweist, und wobei die Flüssigverkapselung in dem Ringraum angeordnet ist.

Das Statorgehäuse, in welchem der Stator und der Rotor angeordnet sind, weist vorzugsweise eine im Wesentlichen zylindrische Form auf. Auf diese Weise ergibt sich vorzugsweise auch eine im Wesentlichen zylindrische Form der elektrischen Antriebseinheit. Eine solche Antriebseinheit ist in der Regel im Hohlraum eines, vorzugsweise ebenfalls im Wesentlichen zylindrischen, Trommelrohrs eines Trommelmotors angeordnet. Das Trommelrohr eines Trommelmotors kann jedoch auch abschnittsweise oder über seine gesamte axiale Länge einen polygonförmigen Querschnitt aufweisen, beispielsweise als sechseckiges Hohlprofil ausgebildet sein. Auch bei einer solchen Ausbildung des Trommelrohrs hat eine zylindrische Form der Antriebseinheit Vorteile. Das Trommelrohr eines Trommelmotors und die elektrische Antriebseinheit, insbesondere deren Antriebsvorrichtung, sind vorzugsweise koaxial ausgerichtet, sodass vorzugsweise Längsachsen des Trommelmotors und/oder des Trommelrohrs und/oder der elektrischen Antriebseinheit und/oder der Antriebsvorrichtung identisch sind.

Die elektrische Antriebseinheit für einen Trommelmotor, insbesondere für einen Trommelmotor für Förderanlagen zum Fördern von Produkten der Lebensmittelindustrie, sieht vor, dass ein Kabel, welches an der Antriebsvorrichtung angeschlossen ist, mit seiner Flüssigverkapselung in einem Ringraum des Hinterflansches angeordnet ist. Am zweiten Abschnitt des Kabels, vorzugsweise am Übergang vom ersten zum zweiten Abschnitt des Kabels, ist eine Flüssigverkapselung angeordnet. Dies hat insbesondere den Vorteil, dass verhindert wird, dass Öl aus der Antriebsvorrichtung durch das Kabel aus der Antriebseinheit und/oder dem Trommelmotor hinaus in eine Arbeitsumgebung gelangt. Insbesondere im Lebensmittelbereich können Ölleckagen aus Antriebseinheiten von Trommelmotoren große Schäden anrichten. Die Herausführung eines Kabels aus einer Antriebseinheit und/oder einem Trommelmotor ist daher von besonderer Bedeutung.

Eine Flüssigverkapselung, die auch als "Potting" bezeichnet werden kann, dient insbesondere dazu, eine Flüssigkeitssperre, insbesondere eine Ölsperre auszubilden. Die Flüssigverkapselung dient somit insbesondere dazu, einen fluiddichten Übergang zu schaffen. Hierzu wird insbesondere eine kapillare Flüssigkeitssperre im zweiten Abschnitt des Kabels erzeugt, vorzugsweise zwischen den Litzen der Einzelleitungen und zwischen einer Isolierung der Einzelleitungen und einem gemeinsamen Mantel und/oder zwischen einer Isolierung und den Einzelleitungen. Die Flüssigverkapselung ist vorzugsweise an dem Ende des zweiten Abschnitts des Kabels angeordnet, an dem der zweite Abschnitt des Kabels in den ersten Abschnitt des Kabels übergeht. Die Flüssigverkapselung vorzugsweise an einem Übergang zwischen dem ersten und zweiten Abschnitt des Kabels angeordnet. Insbesondere ist die Flüssigverkapselung derart angeordnet, dass eine Flüssigkeitssperre gegenüber einem Inneren der Antriebsvorrichtung erzielt wird, so dass durch das Kabel keine Flüssigkeiten in die Anschlussvorrichtung eindringen können und insbesondere keine Flüssigkeiten, wie beispielsweise Öl, aus der Antriebsvorrichtung in den zweiten Abschnitt des Kabels gelangen können.

Eine Flüssigverkapselung entsteht vorzugsweise durch Vergießen des Übergangs zwischen dem ersten und zweiten Abschnitt des Kabels mit einer zunächst flüssigen Substanz bzw. Vergussmasse, die dann aushärtet. Als Vergussmassen kommen beispielsweise zweikomponentige, thermisch härtende Polymersysteme (2K) zum Einsatz, die etwa auf Epoxidharzen, Polyurethanen, Silikon oder Acrylat basieren. Es können auch einkomponentige Polymersysteme (1K) verwendet werden, die beispielsweise unter UV-Licht abbinden. Um die Flüssigverkapselung herzustellen, kann der Übergang zwischen dem ersten und zweiten Abschnitt des Kabels beispielsweise in einer Gießform (oder der sogenannte Pot) montiert werden, die anschließend mit Vergussmasse ausgefüllt wird. Anschließend wird die Vergussmasse ausgehärtet, um die Flüssigverkapselung zu bilden.

Die Flüssigverkapselung des Kabels kann beispielsweise rohrförmig ausgebildet sein und/oder eine im Wesentlichen zylindrische Außenoberfläche aufweisen. Im Inneren weist die Flüssigverkapselung in der Regel eine Form auf, die dem Übergang vom ersten zum zweiten Abschnitt des Kabels entspricht, da die beim Ausfüllen der Gießform flüssige Vergussmasse diese Geometrie vorzugsweise vollständig umschlossen hat.

Im ausgehärteten Zustand ist die Flüssigverkapselung in der Regel im Wesentlichen biegesteif, d.h. einer elastischen und/oder plastischen Verformung beispielsweise durch die Hand eines Benutzers nicht oder nur unwesentlich zugänglich.

Diese Flüssigverkapselung ist in der elektrischen Antriebseinheit in einem Ringraum angeordnet, der an der Stirnseite des Hinterflansches angeordnet ist, die einem Inneren des Statorgehäuses abgewandt ist. Als Hinterflansch wird in der Regel ein Bauteil bezeichnet, welches ein offenes Ende des Statorgehäuses in einer im Wesentlichen axialen Richtung zumindest teilweise verschließt. In der Regel wird durch den Hinterflansch eine Hinterachse hindurch geführt. Der Ringraum ist vorzugsweise radial außen von einer solchen Hinterachse bzw. einer im Hinterflansch für diese Fälle vorgesehenen Öffnung angeordnet. Der Ringraum kann kreisringförmig, insbesondere vollständig umlaufend, ausgebildet sein, oder lediglich als Ringsegment. Der Ringraum stellt vorzugsweise einen offenen oder geschlossenen Hohlraum dar und kann beispielsweise als Vertiefung oder Nut in der Stirnseite des Hinterflansches ausgebildet sein. Wie auch im Folgenden noch weiter beschrieben wird, kann der Ringraum auch geschlossen ausgebildet sein, wobei beispielsweise eine Vertiefung oder Nut mit einem Abdeckelement verschlossen werden kann.

Ferner sind erfindungsgemäß nicht nur die Flüssigverkapselung, sondern auch die daran anschließenden Endbereiche des ersten und zweiten Abschnitts des Kabels in dem Ringraum angeordnet. Erfindungsgemäß liegt das Kabel mit zumindest einem Teil des ersten Abschnitts im Ringraum, woran sich dann die Flüssigverkapselung und zumindest ein Teil des zweiten Abschnitts des Kabels anschließen, die ebenfalls im Ringraum angeordnet sind.

Die Anordnung der Flüssigverkapselung im Ringraum hat unter anderem den Vorteil, dass in axialer Richtung der Antriebseinheit, und damit auch des Trommelmotors, eine besonders kompakte Bauform ermöglicht wird. In existierenden Lösungen wird eine Flüssigverkapselung in der Regel so angeordnet, dass das Kabel mit der Flüssigverkapselung parallel zu einer aus der Antriebseinheit herausgeführten Achse angeordnet ist. Auf diese Weise wird jedoch eine minimale axiale Länge für diese Anordnung benötigt, die mindestens der Länge in Haupterstreckungsrichtung der Flüssigverkapselung entspricht. Durch die erfindungsgemäße Anordnung der Flüssigverkapselung in einem Ringraum kann der in axialer Richtung erforderliche Platzbedarf deutlich reduziert werden, insbesondere im Wesentlichen auf den Durchmesser der Flüssigverkapselung.

Vorzugsweise weist auch der erste Abschnitt des Kabels Einzelleitungen auf, die Litzen sind. Die Einzelleitungen im ersten Abschnitt und/oder im zweiten Abschnitt des Kabels können getrennt voneinander verlaufen. Die Einzelleitungen im ersten Abschnitt und/oder im zweiten Abschnitt des Kabels können auch in einem gemeinsamen Mantel verlaufen. Vorzugsweise sind die im ersten Abschnitt des Kabels getrennt verlaufenden Einzelleitungen mit entsprechenden Einzelleitungen der Antriebsvorrichtung verbunden, beispielsweise durch Crimpen und/oder Löten. Im zweiten Abschnitt des Kabels verlaufen die Einzelleitungen, welche in der Regel aus von einer Isolierung umgebenen Litzen gebildet sind, vorzugsweise in einem gemeinsamen Mantel, insbesondere einem Mantel, welcher sämtliche der Einzelleitungen, vorzugsweise isolierend, umgibt.

Vorzugsweise ist die Flüssigverkapselung mit ihrer Haupterstreckungsrichtung im Wesentlichen orthogonal zur Längsachse des Statorgehäuses angeordnet. Ferner ist bevorzugt, dass sich eine Haupterstreckungsrichtung der Flüssigverkapselung im Wesentlichen parallel zu der Stirnseite des Hinterflansches erstreckt. Die Stirnseite des Hinterflansches erstreckt sich vorzugsweise im Wesentlichen orthogonal zur Längsachse des Statorgehäuses. Der Hinterflansch kann auf seiner Stirnseite Vertiefungen und/oder Erhebungen aufweisen. Eine wesentliche Erstreckung der Stirnseite des Hinterflansches verläuft jedoch vorzugsweise im Wesentlichen orthogonal zur Längsachse des Statorgehäuses, da der Hinterflansch die Antriebseinheit in einer axialen Richtung zumindest teilweise verschließt.

In einer weiteren bevorzugten Ausgestaltung ist vorgesehen, dass die Flüssigverkapselung im Wesentlichen vollständig innerhalb des Ringraums angeordnet ist. In einem Trommelmotor, insbesondere einen Trommelmotor mit kurzer, kompakter axialer Länge, wird in der Regel ein Kopfelement an ein offenes Ende des Trommelrohrs angebracht, welches das Trommelrohr mit der darin angeordneten Antriebseinheit verschließt. Eine innere Stirnseite oder zumindest ein Bereich der inneren Stirnseite des Kopfelements grenzt somit, insbesondere bei kurzer axialer Länge des Trommelmotors, an eine äußere Stirnseite des Hinterflansches (also die dem Rotor und Stator abgewandte Stirnseite des Hinterflansches) an oder ist zumindest axial nicht weit beabstandet von dieser äußeren Stirnseite des Hinterflansches. Insbesondere durch eine relative Rotation des Hinterflansches zum Kopfelement beim Antrieb des Trommelmotors sind Berührungen zwischen dem Hinterflansch und dem Kopfelement, insbesondere durch ungewollt in axialer Richtung vom Hinterflansch hervorstehende Elemente, unerwünscht. Durch die Anordnung der Flüssigverkapselung im Wesentlichen vollständig innerhalb des Ringraums kann in vorteilhafter Weise verhindert oder zumindest reduziert werden, dass die Flüssigverkapselung teilweise in axialer Richtung aus dem Ringraum herausragt und in unerwünschter Weise mit dem Kopfelement in Kontakt kommt.

In einer weiteren bevorzugten Ausführungsform ist vorgesehen, dass in einem mittleren Bereich der Flüssigverkapselung eine Haupterstreckungsrichtung der Flüssigverkapselung im Wesentlichen tangential zum Ringraum verläuft. Der Ringraum weist vorzugsweise eine Umfangsrichtung auf, die vorzugsweise in radialer Richtung im Wesentlichen mittig innerhalb des Ringraums verläuft. Die Flüssigverkapselung ist vorzugsweise derart im Ringraum angeordnet, dass eine Haupterstreckungsrichtung der Flüssigverkapselung im Wesentlichen tangential zu dieser Umfangsrichtung des Ringraums verläuft. Dieser tangentiale Verlauf der Haupterstreckungsrichtung der Flüssigverkapselung bezieht sich vorzugsweise auf einen in Haupterstreckungsrichtung mittleren Bereich der Flüssigverkapselung, da aufgrund der Länge der Flüssigverkapselung die beiden Enden der Flüssigverkapselung von einer solchen Tangentialausrichtung stärker abweichen als die Mitte der Flüssigverkapselung in Haupterstreckungsrichtung.

Ferner ist es bevorzugt, dass der Ringraum in radialer und/oder axialer Richtung eine Erstreckung aufweist, die größer ist als der Durchmesser der Flüssigverkapselung, vorzugsweise um mindestens oder maximal 10 % größer oder mindestens oder maximal 20 % größer oder mindestens oder maximal 25 % größer oder mindestens oder maximal 30 % größer oder mindestens oder maximal 40% größer oder mindestens oder maximal 50 % größer oder mindestens oder maximal 60% größer oder mindestens oder maximal 70 % größer oder mindestens oder maximal 80% größer oder mindestens oder maximal 90 % größer oder mindestens oder maximal 100% größer.

Eine weitere bevorzugte Weiterbildung sieht vor, dass der Ringraum durch eine äußere Wandung des Hinterflansches, insbesondere eine radial und/oder axial äußere Wandung eines Basiskörpers des Hinterflansches, begrenzt ist. In dieser Ausgestaltung kann beispielsweise eine, vorzugsweise radial und/oder axial, äußere Wandung des Hinterflansches in axialer Richtung über die Stirnseite des Hinterflansches hinausragen, und so eine äußere Wandung bilden, die den Ringraum nach radial außen begrenzt.

Ferner ist bevorzugt, dass der Ringraum als stirnseitig offene Nut ausgebildet ist. Eine solche offene Nut kann beispielsweise an ihrer radial äußeren Seite durch eine zuvor beschriebene äußere Wandung des Hinterflansches gebildet sein. Die Basisfläche der Nut kann beispielsweise durch einen gegenüber der äußeren Wandung zurückversetzten Bereich der Stirnfläche des Hinterflansches gebildet sein. Eine radial innere Wandung der Nut kann beispielsweise durch eine, insbesondere radial, innere Wandung des Hinterflansches gebildet sein, welche in axialer Richtung über die Stirnfläche des Hinterflansches hinausragt.

Ferner kann bevorzugt sein, dass der Ringraum durch ein Abdeckelement begrenzt ist. Insbesondere eine Begrenzung des Ringraums in axialer Richtung, insbesondere zu einem im Einbauzustand dem Kopfelement eines Trommelmotors zugewandten Ende hin, ist bevorzugt.

Vorzugsweise verschließt das Abdeckelement die stirnseitig offene Nut des Hinterflansches, insbesondere des Basiskörpers des Hinterflansches, zumindest abschnittsweise. Insbesondere ist auch eine Ausgestaltung besonders bevorzugt, bei der eine stirnseitig offene Nut, insbesondere eine Nut, die in axialer Richtung zum im Einbauzustand dem Kopfelement eines Trommelmotors zugewandten Seite offene Nut, durch ein Abdeckelement in im Wesentlichen axialer Richtung verschlossen wird. Eine solche Ausgestaltung hat den Vorteil, dass das Kabel mit der Flüssigverkapselung in axialer Richtung in den Ringraum eingelegt werden kann, und der Ringraum nach dem Einlegen des Kabels mit der Flüssigverkapselung durch das Abdeckelement verschlossen werden kann. Auf diese Weise kann in vorteilhafter Weise verhindert werden, dass die Flüssigverkapselung und daran angrenzende Bereiche des Kabels in unerwünschter Weise mit einem Kopfelement eines Trommelmotors in Kontakt kommen.

Das Abdeckelement kann vollflächig geschlossen oder abschnittsweise offen ausgebildet sein. Beispielsweise kann das Abdeckelement eine Gitter- und/oder Netz- und/oder Fachwerkstruktur aufweisen.

Vorzugsweise ist das Abdeckelement über einen lösbare oder nicht lösbare Verbindung mit dem Hinterflansch, insbesondere einem Basiskörper des Hinterflansches, verbunden. Die Verbindung kann beispielsweise als formschlüssige und/oder stoffschlüssige und/oder kraftschlüssige Verbindung ausgebildet sein. Ferner vorzugsweise kann die Verbindung als Schnapp- und/oder Rast- und/oder Clip-Verbindung ausgebildet sein.

Vorzugsweise besteht der Hinterflansch aus Metall und/oder Kunststoff oder weist Metall und/oder Kunststoff auf. Das Abdeckelement besteht vorzugsweise aus Kunststoff oder weist Kunststoff auf.

Insbesondere ist bevorzugt, dass eine äußere, den Ringraum nach radial außen begrenzende Wandung aus Metall ausgebildet ist oder Metall aufweist, was in vorteilhafter Weise zu einer hohen Stabilität führt. Eine Ausbildung des Abdeckelements aus Kunststoff kann zu einer kostengünstigen Lösung beitragen.

Ferner ist vorzugsweise vorgesehen, dass die Antriebseinheit eine Hinterachse umfasst, die mit dem Hinterflansch verbunden ist. Vorzugsweise verläuft das Kabel durch ein Inneres der Hinterachse und tritt ferner vorzugsweise an einem offenen Ende in axialer Richtung aus der Hinterachse aus.

Ferner kann vorgesehen sein, dass die Hinterachse über ein Zwischenrohr mit dem Hinterflansch verbunden ist. Das Kabel verläuft vorzugsweise durch ein Inneres des Zwischenrohres und tritt ferner vorzugsweise an einem offenen Ende des Zwischenrohres in axialer Richtung aus diesem aus. Das Zwischenrohr weist vorzugsweise eine radiale Öffnung auf, vorzugsweise an seinem der Antriebsvorrichtung zugewandten Ende. Die radiale Öffnung mündet vorzugsweise in den Bereich des Ringraums. Das Kabel verläuft vorzugsweise aus dem Ringraum durch die radiale Öffnung des Zwischenrohrs in das Innere des Zwischenrohrs und ferner vorzugsweise von dort in das Innere der Hinterachse.

Mit diesen Ausgestaltungen wird eine bevorzugte Kabelführung beschrieben, bei der das Kabel in vorteilhafter Weise von der Antriebsvorrichtung durch den Ringraum in ein Inneres des Zwischenrohrs und/oder der Hinterachse geführt und an einem offenen Ende der Hinterachse axial austritt.

Gemäß einem weiteren Aspekt der Erfindung wird die eingangs genannte Aufgabe gelöst durch einen Trommelmotor umfassend ein Trommelrohr mit einem darin ausgebildeten Hohlraum und einer Längsachse, und eine in dem Hohlraum des Trommelrohrs angeordnete elektrische Antriebseinheit wie zuvor beschrieben.

Vorzugsweise weist der Trommelmotor ein Kopfelement auf, das mit einem Einführabschnitt in ein hohles Ende des Trommelrohrs eingeführt ist. Ferner vorzugsweise ist vorgesehen, dass das Kopfelement, insbesondere eine radial äußere Wandung des Kopfelements, in Richtung der Längsachse des Statorgehäuses den Ringraum des Hinterflansches, insbesondere das Abdeckelement des Hinterflansches, zumindest abschnittsweise überlappt.

In dieser Ausführungsform ist vorgesehen, dass es in axialer Richtung einen Überschneidungsbereich gibt, in dem das Kopfelement und der Hinterflansch überlappend angeordnet sind. Insbesondere ist es bevorzugt, dass eine radial äußere Wandung des Kopfelements ein, vorzugsweise der Wandung des Kopfelements gegenüber radial weiter innen angeordnetes, Abdeckelement zumindest abschnittsweise überlappt. Hierdurch kann eine besonders kompakte und stabile Konstruktion erzielt werden.

Gemäß dem ersten Aspekt der Erfindung umfasst der Hinterflansch einen an einer in Betriebszustand einem Inneren des Statorgehäuses abgewandten Stirnseite angeordneten Ringraum, der angeordnet und ausgebildet ist, eine Flüssigverkapselung eines mit einer Antriebsvorrichtung verbundenen Kabels aufzunehmen, wobei ein erster Abschnitt des Kabels mit der Antriebsvorrichtung verbunden ist und an einem zweiten Abschnitt des Kabels, der Einzelleitungen aufweist, die Litzen sind, die Flüssigverkapselung angeordnet ist.

Zu den Vorteilen, Ausführungsvarianten und Ausführungsdetails dieser weiteren Aspekte der Erfindung und ihrer möglichen Fortbildungen wird auf die vorangegangene Beschreibung zu den entsprechenden Merkmalen der Antriebseinheit verwiesen.

Gemäß einen weiteren Aspekt der Erfindung wird die eingangs genannte Aufgabe gelöst durch ein Verfahren zur Herstellung einer elektrischen Antriebseinheit für einen Trommelmotor umfassend: Bereitstellen einer elektrischen Antriebsvorrichtung mit einem Stator und einem Rotor, die in einem Statorgehäuse angeordnet sind, welches sich entlang einer Längsachse erstreckt, wobei an einem Ende des Statorgehäuses ein Hinterflansch angeordnet ist, der an einer einem Inneren des Statorgehäuses abgewandten Stirnseite einen Ringraum aufweist, Verbinden eines ersten Abschnitts eines Kabels mit der Antriebsvorrichtung, wobei an einem zweiten Abschnitt des Kabels, der die Einzelleitungen aufweist, die Litzen sind, eine Flüssigverkapselung angeordnet ist, Anordnen der Flüssigverkapselung in dem Ringraum, Anordnen der an die Flüssigverkapselung anschließenden Endbereiche des ersten und zweiten Abschnitts des Kabels in dem Ringraum.

Das Verfahren zur Herstellung einer elektrischen Antriebseinheit kann vorzugsweise fortgebildet werden durch Verbinden der Einzelleitungen mit der Antriebsvorrichtung durch Crimpen und/oder Löten.

Gemäß einem weiteren Aspekt der Erfindung wird die eingangs genannte Aufgabe gelöst durch ein Verfahren zur Herstellung eines Trommelmotors, insbesondere eines zuvor beschriebenen Trommelmotors, umfassend: Bereitstellen eines Trommelrohrs mit einem darin ausgebildeten Hohlraum und einer Längsachse, Anordnen einer zuvor beschriebenen elektrischen Antriebseinheit in dem Hohlraum des Trommelrohrs.

Das Verfahren zur Herstellung eines Trommelmotors kann vorzugsweise fortgebildet werden durch Einführen eines Kopfelements mit einem Einführabschnitt in ein hohles Ende des Trommelrohrs.

Die erfindungsgemäßen Verfahren und ihre möglichen Fortbildungen weisen Merkmale bzw. Verfahrensschritte auf, die sie insbesondere zur Herstellung der zuvor beschriebenen Vorrichtungen und ihrer jeweiligen Fortbildungen geeignet machen.

Zu den Vorteilen, Ausführungsvarianten und Ausführungsdetails dieser weiteren Verfahrensaspekte der Erfindung und ihrer möglichen Fortbildungen wird auf die vorangegangene Beschreibung zu den entsprechenden Vorrichtungsmerkmalen verwiesen.

Bevorzugte Ausführungsformen der Erfindung werden beispielhaft anhand der beiliegenden Figuren beschrieben. Es zeigen:
- Figur 1:: eine Frontansicht einer beispielhaften Ausführungsform eines erfindungsgemäßen Hinterflansches mit einem Kopfelement;
- Figur 2:: einen Längsschnitt entlang der Schnittebene A-A gemäß Figur 1;
- Figur 3:: den Längsschnitt gemäß Figur 2 in dreidimensionaler Ansicht;
- Figur 4:: die Hinterachse des Hinterflansches gemäß den Figuren 1-3 in dreidimensionaler Ansicht;
- Figur 5:: das Zwischenrohr des Hinterflansches gemäß den Figuren 1-3 in dreidimensionaler Ansicht;
- Figur 6:: eine beispielhafte Ausführungsform eines erfindungsgemäßen Trommelmotors mit einem Hinterflansch und einem Kopfelement gemäß den Figuren 1-5; und
- Figur 7:: eine weitere beispielhafte Ausführungsform eines erfindungsgemäßen Hinterflansches mit Kopfelement und Kabel.

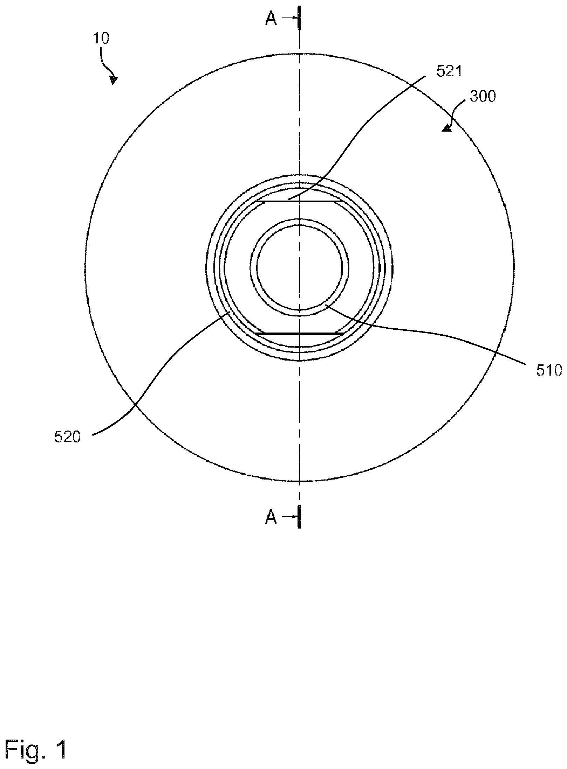

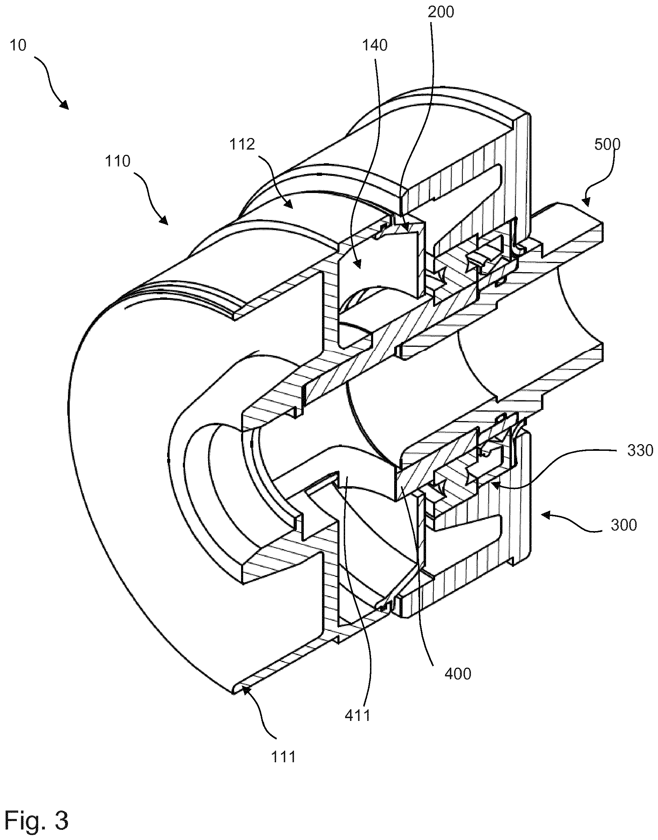

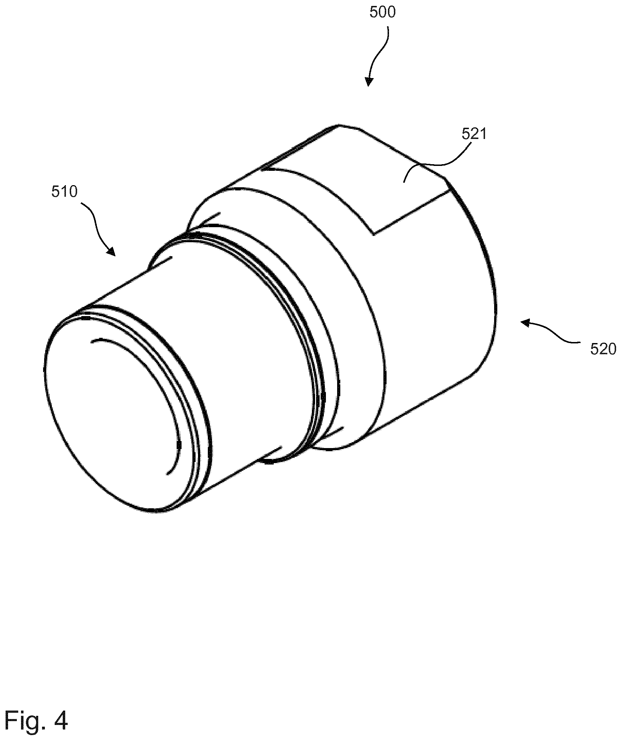

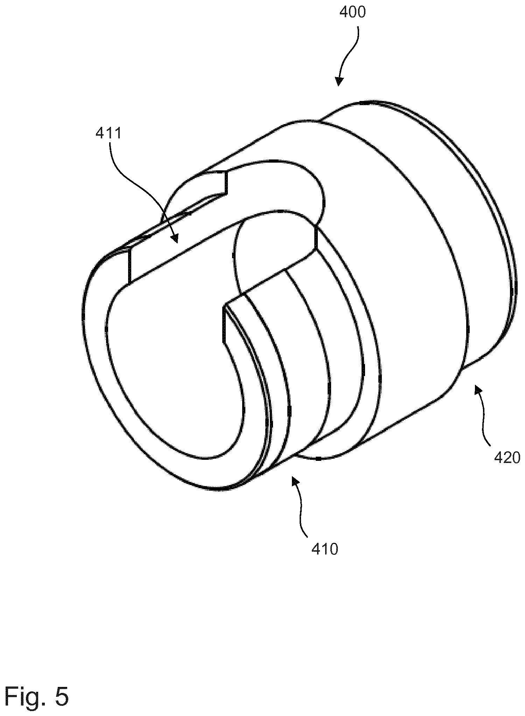

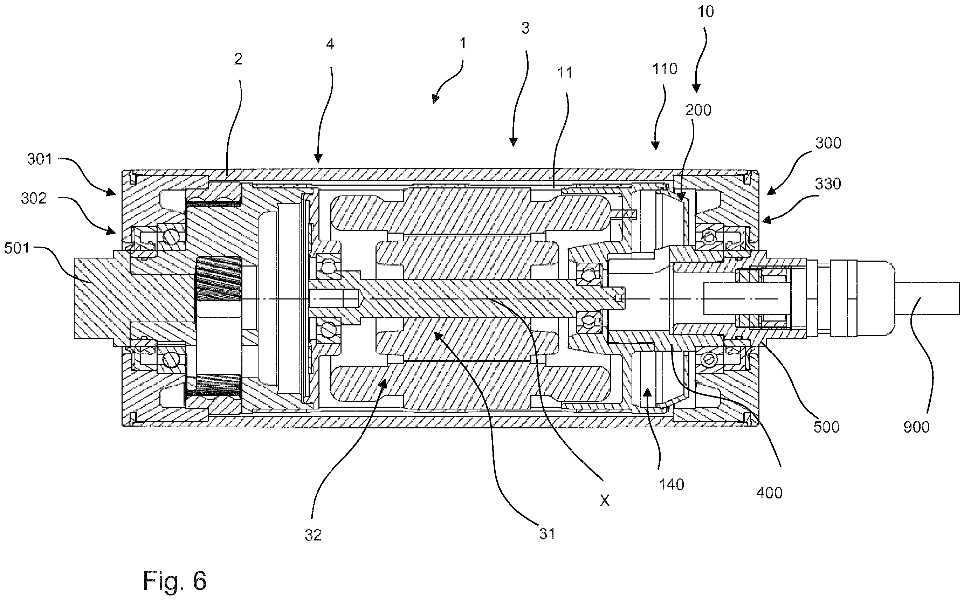

In den Figuren 1-3 ist eine beispielhafte Ausführungsform eines erfindungsgemäßen Hinterflansches 10 mit einem Kopfelement 300 dargestellt. In den Figuren 4 und 5 sind die Hinterachse 500 und das Zwischenrohr 400 des Hinterflansches 10 der Figuren 1-3 separat dreidimensional dargestellt. Figur 6 zeigt den Hinterflansch 10 und das Kopfelement 300 im Einbauzustand in einem Trommelmotor 1.

Der Hinterflansch 10 umfasst einen Basiskörper 110 und ein Abdeckelement 200. Zwischen einer axial und radial äußeren Wandung 112 des Basiskörpers 110 des Hinterflansches 10 und dem Abdeckelement 200 ist ein Ringraum 140 ausgebildet. Der Ringraum 140 ist angeordnet und ausgebildet, ein Kabel (in den Figuren 1-5 nicht dargestellt) mit einer Flüssigverkapselung (in den Figuren 1-5 nicht dargestellt) aufzunehmen. Das Abdeckelement 200 weist an seinem axial inneren Ende 210 einen radial nach außen weisenden Vorsprung 211 auf, der in eine entsprechende Ausnehmung 113 an der axial und radial äußeren Wandung112 des Basiskörpers 110 des Hinterflansch 10 eingreift und somit eine formschlüssige Rastverbindung bildet. Am axial äußeren Ende weist das Abdeckelement 200 eine im Wesentlichen ebene Stirnfläche 220 auf, die von den radial und axial inneren Elementen des Kopfelements 300 beabstandet ist. Lediglich eine äußere Wandung 320 des Kopfelements 300 überlappt in axialer Richtung das Abdeckelement 200 teilweise. Auf diese Weise kann sichergestellt werden, dass ein unerwünschtes Herausragen der Flüssigverkapselung und/oder der im Ringraum 140 angeordneten Kabelabschnitte, insbesondere in axialer Richtung, vermieden werden kann, sodass unerwünschte Kontakte zum Kopfelement 300 vermieden werden können.

Eine axial innere und radial äußere Wandung 111 ist von der axialen und radial äußeren Wandung 112 des Basiskörpers 110 des Hinterflansches radial nach innen zurückversetzt, so dass diese axial innere und radial äußere Wandung 111 in ein offenes Ende eines Statorgehäuses einer Antriebseinheit (in den Figuren 1-5 nicht dargestellt) eingeführt werden kann.

Eine axial und radial innere Wandung 132 des Basiskörpers 110 des Hinterflansches 10 ist ausgebildet, ein Zwischenrohr 400 aufzunehmen. Über das Zwischenrohr 400 ist mit dem Basiskörper 110 des Hinterflansches 10 eine Hinterachse 500 verbunden. Die Hinterachse 500 weist einen axial inneren Abschnitt 510 und einen axial äußeren Abschnitt 520, an dem abgeflachte Bereiche 521 angeordnet sind, auf. Auch das Zwischenrohr 400 weist einen axial inneren Bereich 410, an dem die radiale Öffnung 411 ausgebildet ist, und einen axial äußeren Bereich 420 auf.

Durch die radiale Öffnung 411 des Zwischenrohrs 400 kann ein im Ringraum 140 verlaufendes Kabel in das Innere des Zwischenrohrs 400 gelangen. Durch ein Inneres der Hinterachse 500 kann ein Kabel axial in Richtung der Längsachse X austreten.

Gegenüber der Hinterachse 500 und dem Zwischenrohr 400 ist das Kopfelement 300 über das Lager 330 mit seinen Lager- und Dichtkomponenten 331, 332, 333 drehbar gelagert. Das Kopfelement 300 wird vorzugsweise mit einem Trommelrohr eines Trommelmotors (in den Figuren 1-5 nicht dargestellt) verbunden.

In Figur 6 ist ein Trommelmotor 1 mit einem Trommelrohr 2 mit einem darin ausgebildeten Hohlraum und einer Längsachse X dargestellt. In dem Hohlraum des Trommelrohrs 2 sind eine elektrische Antriebseinheit 3 und eine Getriebeeinheit 4 angeordnet. Am in Figur 6 dargestellten rechten Ende ist die Kopfplatte 300 angeordnet, die gegenüber der Hinterachse 500 über das Lager 330 drehbar gelagert ist. Am in Figur 6 dargestellten linken Ende ist eine weitere Kopfplatte 301 angeordnet, die gegenüber der Vorderachse 501 über das Lager 302 drehbar gelagert ist. Die Antriebseinheit 3 weist eine Antriebsvorrichtung auf, die in einem Statorgehäuse 11' angeordnet ist und einen Rotor 31 und einen Stator 32 umfasst.

Die Antriebseinheit 3 treibt über die Getriebeeinheit 4 das Trommelrohr 2 des Trommelmotors 1 an. Am in Figur 6 dargestellten rechten Ende der Antriebseinheit 3 ist der Hinterflansch 10 angeordnet, in dessen zwischen dem Basiskörper 110 und dem Abdeckelement 200 gebildeten Ringraum 140 ein Kabel 900 angeordnet werden kann, welches durch das Innere des Zwischenrohrs 400 und dass Innere der Hinterachse 500 axial austritt.

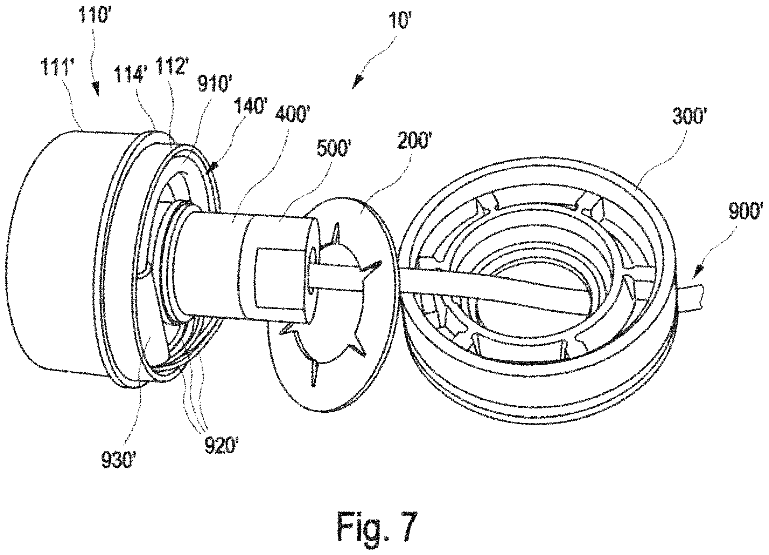

In Figur 7 ist ein Hinterflansch 10' und ein Kopfelement 300' sowie ein Kabel 900' im teilweise unmontierten Zustand abgebildet. Der Hinterflansch 10' weist einen Basiskörper 110' und ein Abdeckelement 200' auf. Der Basiskörper 110' weist einen Ringraum 140' auf, der durch eine radial und axial äußere Wandung 112' begrenzt ist und als stirnseitig offene Nut ausgebildet ist, die durch das Abdeckelement 200' verschlossen werden kann. Mit dem Hinterflansch 10' ist über ein Zwischenrohr 400' eine Hinterachse 500' verbunden, durch die das Kabel 900' axial austritt. Eine radial äußere und axial innere Wandung 111' ist über einen radial vorstehenden Ring 114' mit der radial und axial äußeren Wandung 112' verbunden.

Im Ringraum 140' ist ein Kabel angeordnet, dessen erster Abschnitt, in dem die Einzelleitungen 920' frei geführt sind, und dessen zweiter Abschnitt, in dem die Einzelleitungen von einem gemeinsamen Mantel 910' umgeben sind, durch eine Flüssigverkapselung 930' verbunden sind. Die Flüssigverkapselung 930' ist im Wesentlichen vollständig innerhalb des Ringraums 140" angeordnet. Ferner verläuft in einem mittleren Bereich der Flüssigverkapselung 930' eine Haupterstreckungsrichtung der Flüssigverkapselung 930' im Wesentlichen tangential zum Ringraum 140'.

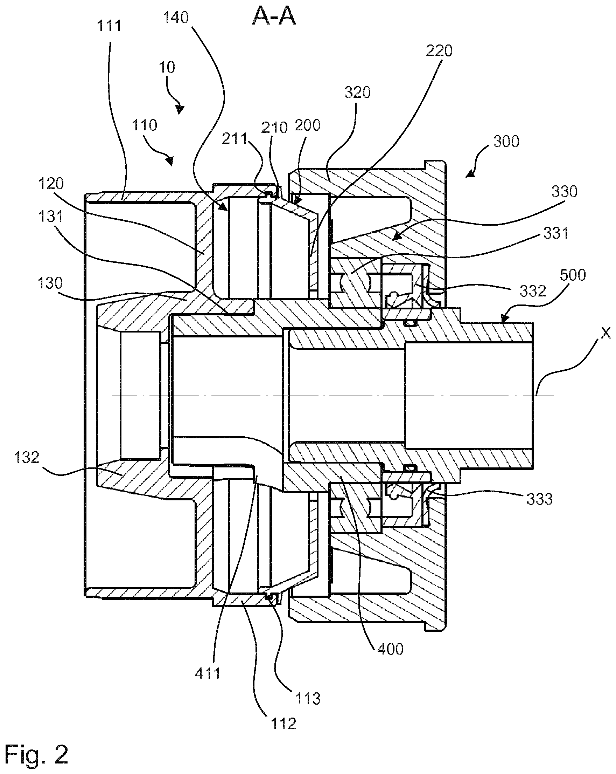

Wie insbesondere in den Figuren 2, 3, 6 und 7 zu erkennen ist, kann durch die Anordnung der Flüssigverkapselung im Ringraum, also insbesondere orthogonal zur Längsachse X, eine besonders kompakte Bauform mit einer geringen Gesamtlänge (beispielsweise FW bzw. EL in Figur 6) erzielt werden.

## Patentansprüche

1. Elektrische Antriebseinheit (3) für einen Trommelmotor (1), umfassend:
- eine elektrische Antriebsvorrichtung mit einem Stator (32) und einem Rotor (31), die in einem Statorgehäuse (11) angeordnet sind, welches sich entlang einer Längsachse (X) erstreckt,
- ein Kabel (900, 900'), wobei ein erster Abschnitt des Kabels (900, 900') mit der Antriebsvorrichtung verbunden ist und an einem zweiten Abschnitt des Kabels (900, 900'), der Einzelleitungen aufweist, die Litzen sind, eine Flüssigverkapselung (930') angeordnet ist,
- wobei an einem axialen Ende des Statorgehäuses (11) ein Hinterflansch (10 10')angeordnet ist, wobei der Hinterflansch umfasst,
∘ einen an einer in Betriebszustand einem Inneren des Statorgehäuses (11) abgewandten Stirnseite angeordneten Ringraum (140, 140'), der angeordnet und ausgebildet ist, eine Flüssigverkapselung (930') des mit der Antriebsvorrichtung verbundenen Kabels (900, 900') aufzunehmen,
∘ wobei der erste Abschnitt des Kabels (900, 900') mit der Antriebsvorrichtung verbunden ist und an dem zweiten Abschnitt des Kabels (900, 900'), der Einzelleitungen aufweist, die Litzen sind, die Flüssigverkapselung (930') angeordnet ist,
- und wobei die Flüssigverkapselung (930') in dem Ringraum (140, 140') angeordnet ist,
- und wobei die an die Flüssigverkapselung (930') anschließenden Endbereiche des ersten und zweiten Abschnitts des Kabels in dem Ringraum (140, 140') angeordnet sind.

2. Antriebseinheit (3) nach dem vorhergehenden Anspruch,
**dadurch gekennzeichnet, dass** der erste Abschnitt des Kabels (900, 900') Einzelleitungen (920') aufweist, die Litzen sind.

3. Antriebseinheit (3) nach mindestens einem der vorhergehenden Ansprüche 1-2,
**dadurch gekennzeichnet, dass** die Einzelleitungen (920') im ersten Abschnitt und/oder im zweiten Abschnitt des Kabels (900, 900') getrennt voneinander verlaufen und/oder die Einzelleitungen im ersten Abschnitt und/oder im zweiten Abschnitt des Kabels (900, 900') in einem gemeinsamen Mantel (910') verlaufen.

4. Antriebseinheit (3) nach mindestens einem der vorhergehenden Ansprüche 1-3, **dadurch gekennzeichnet, dass** sich eine Haupterstreckungsrichtung der Flüssigverkapselung (930') im Wesentlichen parallel zu der Stirnseite des Hinterflansches (10, 10') erstreckt, und/oder
**dadurch gekennzeichnet, dass** die Flüssigverkapselung (930') im Wesentlichen vollständig innerhalb des Ringraums (140, 140') angeordnet ist.

5. Antriebseinheit (3) nach mindestens einem der vorhergehenden Ansprüche 1-4, **dadurch gekennzeichnet, dass** der Ringraum (140, 140') durch eine äußere Wandung des Hinterflansches (10, 10') begrenzt ist, und/oder **dadurch gekennzeichnet, dass** der Ringraum (140, 140') als stirnseitig offene Nut ausgebildet ist, und/oder
**dadurch gekennzeichnet, dass** der Ringraum (140, 140') durch ein Abdeckelement (200, 200') begrenzt ist.

6. Antriebseinheit (3) nach dem vorhergehenden Anspruch,
**dadurch gekennzeichnet, dass** das Abdeckelement (200, 200') die stirnseitig offene Nut eines Basiskörpers des Hinterflansches (10, 10') zumindest abschnittsweise verschließt.

7. Antriebseinheit (3) nach mindestens einem der vorhergehenden Ansprüche 1-6, **dadurch gekennzeichnet, dass** der Hinterflansch (10, 10') aus Metall besteht oder Metall aufweist, und/oder
**dadurch gekennzeichnet, dass** das Abdeckelement (200, 200') aus Kunststoff besteht oder Kunststoff aufweist.

8. Antriebseinheit (3) nach mindestens einem der vorhergehenden Ansprüche 1-7, umfassend eine Hinterachse, die mit dem Hinterflansch (10, 10') verbunden ist, wobei vorzugsweise das Kabel (900, 900') durch ein Inneres der Hinterachse verläuft.

9. Antriebseinheit (3) nach dem vorhergehenden Anspruch,
**dadurch gekennzeichnet, dass** die Hinterachse über ein Zwischenrohr mit dem Hinterflansch (10, 10') verbunden ist, wobei vorzugsweise das Kabel (900, 900') durch ein Inneres des Zwischenrohrs (400, 400') verläuft.

10. Antriebseinheit (3) nach einem der Ansprüche 8 oder 9,
**dadurch gekennzeichnet, dass** das Zwischenrohr oder die Hinterachse eine radiale Öffnung (411) aufweist, die vorzugsweise in den Bereich des Ringraums (140, 140') mündet, wobei vorzugsweise das Kabel (900, 900') aus dem Ringraum (140, 140') durch die radiale Öffnung (411) des Zwischenrohrs (400, 400') oder der Hinterachse verläuft.

11. Trommelmotor (1) umfassend
- ein Trommelrohr (2) mit einem darin ausgebildeten Hohlraum und einer Längsachse (X),
- eine in dem Hohlraum des Trommelrohrs (") angeordnete elektrische
- Antriebseinheit (3) nach mindestens einem der vorhergehenden Ansprüche 1-10.

12. Trommelmotor (1) nach dem vorhergehenden Anspruch,
**gekennzeichnet durch** ein Kopfelement (300), das mit einem Einführabschnitt (320) in ein hohles Ende des Trommelrohrs (2) eingeführt ist, wobei vorzugsweise das Kopfelement (300), insbesondere eine radial äußere Wandung des Kopfelements (300), in Richtung der Längsachse des Statorgehäuses (11) den Ringraum (140, 140') des Hinterflansches (10, 10'), insbesondere das Abdeckelement des Hinterflansches (10, 10'), zumindest abschnittsweise überlappt.

13. Verfahren zur Herstellung einer elektrischen Antriebseinheit (3) nach einem der vorhergehenden Ansprüche 1-10,
**gekennzeichnet durch**:
- Bereitstellen einer elektrischen Antriebsvorrichtung mit einem Stator (32) und einem Rotor (31), die in einem Statorgehäuse (11) angeordnet sind, welches sich entlang einer Längsachse erstreckt, wobei an einem axialen Ende des Statorgehäuses (11) ein Hinterflansch (10, 10') angeordnet ist, der an einer einem Inneren des Statorgehäuses (11) abgewandten Stirnseite einen Ringraum (140, 140') aufweist,
- Verbinden eines ersten Abschnitts eines Kabels (900, 900') mit der Antriebsvorrichtung, wobei an einem zweiten Abschnitt des Kabels (900, 900'), der die Einzelleitungen aufweist, die Litzen sind, eine Flüssigverkapselung (930') angeordnet ist,
- Anordnen der Flüssigverkapselung (930') in dem Ringraum (140, 140'),
- Anordnen der an die Flüssigverkapselung (930') anschließenden Endbereiche des ersten und zweiten Abschnitts des Kabels in dem Ringraum (140, 140').

14. Verfahren zur Herstellung eines Trommelmotors (1), insbesondere eines Trommelmotors nach einem der vorhergehenden Ansprüche 11-12,
umfassend:
- Bereitstellen eines Trommelrohrs (2) mit einem darin ausgebildeten Hohlraum und einer Längsachse,
- Anordnen einer elektrischen Antriebseinheit (3) nach mindestens einem der vorhergehenden Ansprüche 1-10 in dem Hohlraum des Trommelrohrs (2).

## Claims

1. Electric drive unit (3) for a drum motor (1), comprising:
- an electric drive device having a stator (32) and a rotor (31), said stator (32) and said rotor (31) being disposed in a stator housing (11) which extends along a longitudinal axis (X);
- a cable (900, 900'), wherein a first portion of the cable (900, 900') is connected to the drive device, and a liquid encapsulation (930') is disposed on a second portion of the cable (900, 900') that has individual lines which are litz wires;
- wherein a rear flange (10, 10') is disposed on an axial end of the stator housing (11), wherein the rear flange comprises
∘ an annular space (140, 140') which is disposed on an end side that in the operating state faces away from an interior of the stator housing (11) and which is disposed and configured for receiving a liquid encapsulation (930') of the cable (900, 900') that is connected to the drive device;
∘ wherein the first portion of the cable (900, 900') is connected to the drive device, and the liquid encapsulation (930') is disposed on the second portion of the cable (900, 900') that has individual lines which are litz wires;
- and wherein the liquid encapsulation (930') is disposed in the annular space (140, 140');
- and wherein the end regions of the first and the second portion of the cable that adjoin the liquid encapsulation (930') are disposed in the annular space (140, 140').

2. Drive unit (3) according to the preceding claim, **characterized in that** the first portion of the cable (900, 900') has individual lines (920') which are litz wires.

3. Drive unit (3) according to at least one of preceding Claims 1 to 2,
**characterized in that** the individual lines (920') in the first portion and/or in the second portion of the cable (900, 900') run in a mutually separate manner, and/or the individual lines in the first portion and/or in the second portion of the cable (900, 900') run in a common jacket (910').

4. Drive unit (3) according to at least one of preceding Claims 1 to 3,
**characterized in that** a direction of main extent of the liquid encapsulation (930') extends so as to be substantially parallel with the end side of the rear flange (10, 10'), and/or
**characterized in that** the liquid encapsulation (930') is disposed so as to be substantially completely within the annular space (140, 140').

5. Drive unit (3) according to at least one of preceding Claims 1 to 4,
**characterized in that** the annular space (140, 140') is delimited by an outer wall of the rear flange (10, 10'), and/or
**characterized in that** the annular space (140, 140') is configured as a groove that is open at the end side, and/or
**characterized in that** the annular space (140, 140') is delimited by a cover element (200, 200').

6. Drive unit (3) according to the preceding claim, **characterized in that** the cover element (200, 200') at least in portions closes the groove of a main body of the rear flange (10, 10'), said groove being open at the end side.

7. Drive unit (3) according to at least one of preceding Claims 1 to 6,
**characterized in that** the rear flange (10, 10') is composed of metal or comprises metal, and/or **characterized in that** the cover element (200, 200') is composed of plastics material or comprises plastics material.

8. Drive unit (3) according to at least one of preceding Claims 1 to 7,
comprising a rear axle which is connected to the rear flange (10, 10'), wherein the cable (900, 900') preferably runs through an interior of the rear axle.

9. Drive unit (3) according to the preceding claim, **characterized in that** the rear axle is connected to the rear flange (10, 10') by way of an intermediate tube, wherein the cable (900, 900') preferably runs through an interior of the intermediate tube (400, 400').

10. Drive unit (3) according to Claim 8 or 9, **characterized in that** the intermediate tube or the rear axle has a radial opening (411) which preferably opens into the region of the annular space (140, 140'), wherein the cable (900, 900') preferably runs out of the annular space (140, 140') through the radial opening (411) of the intermediate tube (400, 400') or of the rear axle.

11. Drum motor (1) comprising
- a drum tube (2) having a cavity configured therein and a longitudinal axis (X);
- an electric drive unit (3) according to at least one of the preceding Claims 1 to 10 that is disposed in the cavity of the drum tube (2).

12. Drum motor (1) according to the preceding claim, **characterized by** a head element (300) which by way of an introduction portion (320) is introduced into a hollow end of the drum tube (2), wherein the head element (300), in particular a radially outer wall of the head element (300), preferably at least in portions overlaps the annular space (140, 140') of the rear flange (10, 10'), in particular the cover element of the rear flange (10, 10'), in the direction of the longitudinal axis of the stator housing (11).

13. Method for producing an electric drive unit (3) according to one of preceding Claims 1 to 10, **characterized by**
- providing an electric drive device having a stator (32) and a rotor (31), said stator (32) and said rotor (31) being disposed in a stator housing (11) which extends along a longitudinal axis, wherein a rear flange (10, 10') which at an end side that faces away from an interior of the stator housing (11) has an annular space (140, 140') is disposed on an axial end of the stator housing (11);
- connecting a first portion of a cable (900, 900') to the drive device, wherein a liquid encapsulation (930') is disposed on a second portion of the cable (900, 900') that has the individual lines which are litz wires;
- disposing the liquid encapsulation (930') in the annular space (140, 140');
- disposing the end regions of the first and the second portion of the cable that adjoin the liquid encapsulation (930') in the annular space (140, 140').

14. Method for producing a drum motor (1), in particular a drum motor according to one of preceding Claims 11 to 12,
comprising:
- providing a drum tube (2) having a cavity configured therein and a longitudinal axis;
- disposing an electric drive unit (3) according to at least one of preceding Claims 1 to 10 in the cavity of the drum tube (2).

## Revendications

1. Unité d'entraînement électrique (3) pour un moteur à tambour (1), comprenant :
- un dispositif d'entraînement électrique équipé d'un stator (32) et d'un rotor (31), disposés dans un carter de stator (11) s'étendant le long d'un axe longitudinal (X) ;
- un câble (900, 900'), une première section du câble (900, 900') étant reliée au dispositif d'entraînement et un encapsulage de fluide (930') étant disposé au niveau d'une deuxième section du câble (900, 900') comportant des câbles individuels prenant la forme de cordons ;
- un flasque arrière (10, 10') étant disposé au niveau d'une extrémité axiale du carter de stator (11), le flasque arrière comprenant :
∘ un espace annulaire (140, 140') disposé au niveau d'un côté avant opposé, dans l'état de fonctionnement, à un intérieur du carter de stator (11) et qui est conçu et réalisé pour loger un encapsulage de fluide (930') du câble (900, 900') relié au dispositif d'entraînement ;
∘ la première section du câble (900, 900') étant reliée au dispositif d'entraînement et l'encapsulage de fluide (930') étant disposé au niveau de la deuxième section du câble (900, 900') qui comporte des câbles individuels prenant la forme de cordons,
- et l'encapsulage de fluide (930') étant disposé dans l'espace annulaire (140, 140') ;
- et les zones d'extrémité, connexes à l'encapsulage de fluide (930'), de la première et deuxième section du câble étant disposées dans l'espace annulaire (140, 140').

2. Unité d'entraînement (3) selon la revendication précédente, **caractérisée en ce que** la première section du câble (900, 900') comporte des câbles individuels (920') qui prennent la forme de cordons.

3. Unité d'entraînement (3) selon au moins l'une quelconque des revendications précédentes 1 à 2, **caractérisée en ce que** les câbles individuels (920') s'étendent séparément l'un par rapport à l'autre dans la première section et/ou dans la deuxième section du câble (900, 900') et/ou les câbles individuels s'étendent dans une gaine commune (910') dans la première section et/ou dans la deuxième section du câble (900, 900').

4. Unité d'entraînement (3) selon au moins l'une quelconque des revendications précédentes 1 à 3, **caractérisée en ce qu'**une direction d'extension principale de l'encapsulage de fluide (930') s'étend pour l'essentiel parallèlement au côté avant du flasque arrière (10, 10') ; et/ou
**caractérisée en ce que** l'encapsulage de fluide (930') est disposé pour l'essentiel entièrement à l'intérieur de l'espace annulaire (140, 140').

5. Unité d'entraînement (3) selon au moins l'une quelconque des revendications précédentes 1 à 4, **caractérisée en ce que** l'espace annulaire (140, 140') est délimité par une paroi extérieure du flasque arrière (10, 10') ; et/ou
**caractérisée en ce que** l'espace annulaire (140, 140') est réalisé sous la forme d'une rainure ouverte sur le côté avant ; et/ou
**caractérisée en ce que** l'espace annulaire (140, 140') est délimité par un élément de recouvrement (200, 200').

6. Unité d'entraînement (3) selon la revendication précédente, **caractérisée en ce que** l'élément de recouvrement (200, 200') ferme au moins en partie la rainure ouverte sur le côté avant d'un corps de base du flasque arrière (10, 10').

7. Unité d'entraînement (3) selon au moins l'une quelconque des revendications précédentes 1 à 6, **caractérisée en ce que** le flasque arrière (10, 10') est composé de métal ou comporte du métal ; et/ou **caractérisée en ce que** l'élément de recouvrement (200, 200') est en matière plastique ou comporte de la matière plastique.

8. Unité d'entraînement (3) selon au moins l'une quelconque des revendications précédentes 1 à 7, comprenant un axe arrière qui est relié au flasque arrière (10, 10'), le câble (900, 900') s'étendant de préférence à travers un intérieur de l'axe arrière.

9. Unité d'entraînement (3) selon la revendication précédente, **caractérisée en ce que** l'axe arrière est relié au flasque arrière (10, 10') via un tube intermédiaire, le câble (900, 900') s'étendant de préférence à travers un intérieur du tube intermédiaire (400, 400').

10. Unité d'entraînement (3) selon l'une quelconque des revendications 8 ou 9,
**caractérisée en ce que** le tube intermédiaire ou l'axe arrière comporte une ouverture radiale (411) débouchant de préférence dans la zone de l'espace annulaire (140, 140'), le câble (900, 900') s'étendant de préférence, depuis l'espace annulaire (140, 140'), à travers l'ouverture radiale (411) du tube intermédiaire (400, 400') ou de l'axe arrière.

11. Moteur à tambour (1) comprenant :
- un tube de tambour (2) avec un espace creux réalisé à l'intérieur et avec un axe longitudinal (X) ;
- une unité d'entraînement électrique (3) selon au moins l'une quelconque des revendications précédentes 1 à 10 disposée dans l'espace creux du tube de tambour (2) .

12. Moteur à tambour (1) selon la revendication précédente,
**caractérisé par** un élément de tête (300) qui est introduit avec une section d'introduction (320) dans une extrémité creuse du tube de tambour (2), l'élément de tête (300), notamment une paroi extérieure dans le plan radial de l'élément de tête (300), chevauchant de préférence au moins en partie l'espace annulaire (140, 140') du flasque arrière (10, 10'), notamment l'élément de recouvrement du flasque arrière (10,10'), en direction de l'axe longitudinal du carter de stator (11) .

13. Procédé de fabrication d'une unité d'entraînement électrique (3) selon l'une quelconque des revendications précédentes 1 à 10,
**caractérisé par** :
- la mise à disposition d'un dispositif d'entraînement électrique équipé d'un stator (32) et d'un rotor (31) disposés dans un carter de stator (11) s'étendant le long d'un axe longitudinal, un flasque arrière (10, 10') étant disposé au niveau d'une extrémité axiale du carter de stator (11), ledit flasque comportant un espace annulaire (140, 140') au niveau d'un côté avant opposé à un intérieur du carter de stator (11) ;
- la connexion de la première section d'un câble (900, 900') avec le dispositif d'entraînement, un encapsulage de fluide (930') étant disposé au niveau d'une deuxième section du câble (900, 900') comportant les câbles individuels qui prennent la forme de cordons ;
- la mise en place de l'encapsulage de fluide (930') dans l'espace annulaire (140, 140') ;
- la mise en place des zones d'extrémité, connexes à l'encapsulage de fluide (930'), de la première et deuxième section du câble dans l'espace annulaire (140, 140').

14. Procédé de fabrication d'un moteur à tambour (1), notamment d'un moteur à tambour selon l'une quelconque des revendications précédentes 11 à 12, comprenant :
- la mise à disposition d'un tube de tambour (2) avec un espace creux réalisé à l'intérieur et avec un axe longitudinal ;
- la mise en place d'une unité d'entraînement électrique (3) selon au moins l'une quelconque des revendications précédentes 1 à 10 dans l'espace creux du tube de tambour (2).
